# DEMANDE DE BREVET EUROPEEN

(11) **EP 2 746 995 A1**
(43) Date de publication de la demande: **25.06.2014**
(21) Numéro de dépôt: 12306642.5
(22) Date de dépôt: 20.12.2012
(51) Int. Cl.: G06K 19/07

(54) **Carte à puce multifonctions comportant un capteur photovoltaïque**

(71) Demandeur: Gemalto SA, 92190 Meudon (FR)
(72) Inventeur: Fidalgo, Jean-Christophe, 13705 La Ciotat (FR); Leigenguth, Joseph, 13705 La Ciotat (FR); Robles, Laurence, 13705 La Ciotat (FR)

(57) **Abrégé**

L'invention concerne une carte à puce multifonctions, comportant :
-un élément de corps de carte, comportant un module à contact incluant une puce électronique ;
-un dispositif de stockage d'énergie rechargeable, connecté électriquement au circuit électronique pour alimenter électriquement ce circuit électronique ;
-un capteur photovoltaïque, s'étendant au moins partiellement sur une face de l'élément de corps de carte et étant électriquement connecté au dispositif de stockage d'énergie pour recharger ce dispositif de stockage d'énergie ;

Le capteur photovoltaïque est au moins partiellement transparent pour la lumière visible.

## Description

L'invention concerne l'utilisation d'un capteur photovoltaïque transparent pour alimenter électriquement une carte à puce multifonctions. L'invention concerne également un procédé d'assemblage d'une carte à puce multifonctions comportant ce capteur photovoltaïque transparent.

On connaît des cartes à puces multifonctions, qui comportent, en plus d'une puce électronique incluse dans un module à contact, des composants électroniques additionnels tels qu'un écran, un clavier, un circuit intégré ou une antenne radiofréquence. De tels composants électroniques permettent l'implémentation de fonctionnalités qui vont au-delà de celles offertes par une simple carte à puce, comme par exemple la consultation d'informations enregistrées dans la puce, ou encore la transmission de mots de passe à usage unique. Pour assurer le fonctionnement de ces composants, il est nécessaire d'intégrer une source d'énergie électrique dans la carte à puce pour alimenter ces composants. Classiquement, la source d'énergie est une batterie de type primaire qui n'a pas la possibilité de se recharger. Pour augmenter la durée de vie de ce type de produit, la source d'énergie peut être rechargeable et elle doit donc comporter un dispositif de collecte d'énergie (« energy harvesting » en langue anglaise).

Le brevet US 6561430 B2 décrit une telle carte à puce, dans laquelle un capteur photovoltaïque est configuré pour recharger une batterie destinée à alimenter électriquement de tels composants. Cette carte à puce comporte ainsi :
- un élément de corps de carte, de forme essentiellement plane ;
- un circuit intégré, placé dans l'élément de corps de carte ;
- un dispositif de stockage d'énergie rechargeable, connecté électriquement au circuit intégré pour alimenter électriquement ce circuit intégré ;
- un capteur photovoltaïque, s'étendant au moins partiellement sur une face de l'élément de corps de carte et étant électriquement connecté au dispositif de stockage d'énergie pour recharger ce dispositif de stockage d'énergie.

Cette carte présente cependant l'inconvénient que le capteur photovoltaïque présente un aspect peu esthétique et masque des informations visuelles typiquement inscrites en surface de la carte. Ces contraintes conduisent à réduire la superficie du capteur photovoltaïque, ce qui limite la puissance électrique apte à être récupérée pour alimenter électriquement le dispositif de stockage d'énergie.

Il existe donc un besoin pour une carte à puce multifonctions, comportant une source d'énergie solaire présentant un aspect amélioré.

L'invention concerne donc une carte à puce multifonctions, comportant :
- un élément de corps de carte, comportant un module à contact incluant une puce électronique ;
- un dispositif de stockage d'énergie rechargeable, connecté électriquement au circuit électronique pour alimenter électriquement ce circuit électronique ;
- un capteur photovoltaïque, s'étendant au moins partiellement sur une face de l'élément de corps de carte et étant électriquement connecté au dispositif de stockage d'énergie pour recharger ce dispositif de stockage d'énergie ;
dans laquelle le capteur photovoltaïque est au moins partiellement transparent pour la lumière visible.

Les modes de réalisation de l'invention peuvent présenter une ou plusieurs des caractéristiques suivantes :
- le capteur photovoltaïque transparent s'étend sur au moins 70 % de la surface de l'élément de corps de carte ;
- un revêtement transparent de protection est déposé sur le capteur photovoltaïque transparent et une bande magnétique est placée sur ce revêtement transparent de protection.

Selon un autre aspect, l'invention porte également sur l'utilisation d'un capteur photovoltaïque transparent pour alimenter électriquement une carte à puce multifonctions, cette carte à puce multifonctions comportant :
- un élément de corps de carte, comportant un module à contact incluant une puce électronique ;
- un circuit électronique, placé dans l'élément de corps de carte ;
- un dispositif de stockage d'énergie rechargeable, connecté électriquement au circuit électronique pour alimenter électriquement ce circuit électronique ;
   le capteur photovoltaïque transparent s'étendant au moins partiellement sur une face de l'élément de corps de carte et étant électriquement connecté au dispositif de stockage d'énergie pour recharger ce dispositif de stockage d'énergie.

Selon un autre aspect, l'invention porte également sur un procédé d'assemblage d'une carte à puce multifonctions comportant :
- la fourniture d'une carte à puce multifonctions, comportant :
   - un élément de corps de carte,
   - un circuit électronique, placé dans l'élément de corps de carte ;
   - un dispositif de stockage d'énergie rechargeable, connecté électriquement au circuit électronique pour alimenter électriquement ce circuit électronique ;
- la fourniture du capteur photovoltaïque transparent, ce capteur étant placé de manière à s'étendre sur une face dudit élément de corps de carte ;
- le pressage de l'ensemble comportant l'élément de corps de carte et le capteur photovoltaïque transparent pour assembler mécaniquement cet ensemble.

Les modes de réalisation de l'invention peuvent présenter une ou plusieurs des caractéristiques suivantes :
- le matériau électriquement conducteur comporte un film adhésif électriquement conducteur présentant des propriétés de conduction électriques anisotropes ;
- le matériau électriquement conducteur comporte un élastomère électriquement conducteur sensible à la pression ;
- le matériau électriquement conducteur comporte des particules métalliques ou d'élastomère électriquement conductrices liées par une pâte non électriquement conductrice.

L'invention sera mieux comprise à la lecture de la description qui va suivre, donnée uniquement à titre d'exemple non limitatif et faite en se référant aux dessins sur lesquels :
- la figure 1 est une illustration schématique, selon une vue écorchée, d'une carte à puce multifonctions ;
- la figure 2 est une illustration schématique d'une face avant de la carte à puce multifonctions de la figure 1 ;
- la figure 3 est une illustration schématique, selon le plan de coupe AA', de la carte à puce multifonctions de la figure 1.
- la figure 4 est un organigramme d'un procédé d'assemblage de la carte à puce multifonctions de la figure 1 ;
- la figure 5 illustre schématiquement une étape d'assemblage de la carte à puce multifonctions de la figure 1 ;
- la figure 6 est une illustration schématique, selon une vue de profil, d'un autre mode de réalisation de la carte à puce multifonctions de la figure 1, dans laquelle une bande magnétique est placée sur un capteur photovoltaïque de cette carte

Dans ces figures, les mêmes références sont utilisées pour désigner les mêmes éléments.

Dans la suite de cette description, les caractéristiques et fonctions bien connues de l'homme du métier ne sont pas décrites en détails.

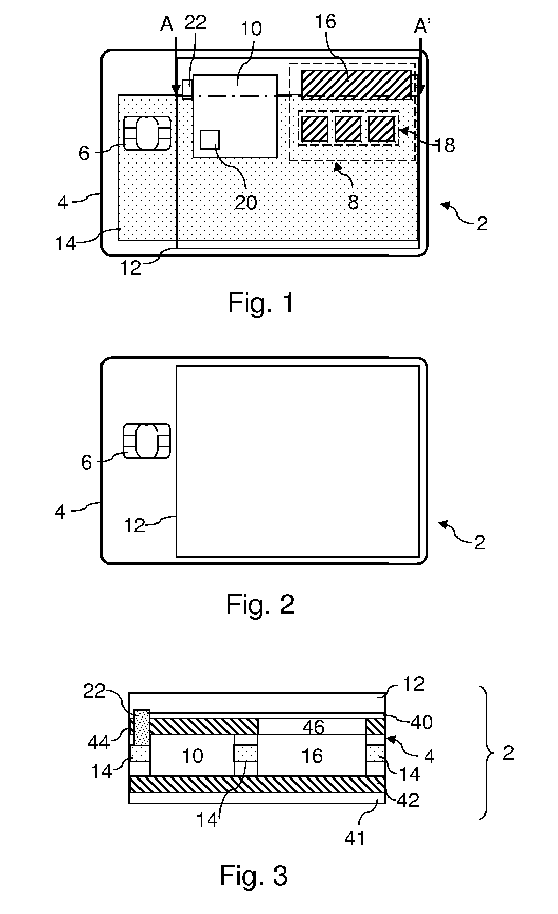

Les figures 1 et 2 représentent une carte à puce 2 multifonctions. Cette carte 2 comporte ici :
- un élément de corps de carte 4 (« inlay » en langue anglaise) ;
- un module à contact 6 comportant une puce électronique, intégré dans l'élément 4 et configuré pour être lu par un lecteur de carte à puce ;
- un circuit électronique 8 ;
- un dispositif 10 de stockage d'énergie, connecté électriquement au circuit 8 pour alimenter électriquement ce circuit 8 ;
- un capteur photovoltaïque 12 transparent ;
- un circuit imprimé flexible 14, intégré dans l'élément 4.

Pour simplifier la figure 1, des composants de la carte 2 superposés les uns sur les autres sont représentés de façon visible. Le détail de connexions électriques entre ces éléments de la carte 2 n'est pas représenté.

Dans cette description, un objet, tel qu'une couche d'un matériau, est dit transparente si cet objet présente, pour la lumière visible, un taux de transmission optique supérieur ou égal à 50 % ou à 60 % et, avantageusement, supérieur à 80 % ou à 90 %, en particulier selon une vision normale de la surface de cet objet, c'est à dire perpendiculairement par rapport à la surface de cet objet.

L'élément 4 présente ici une forme essentiellement plane. Les dimensions de l'élément 4 sont, par exemple, choisies pour que la carte 2 présente le format « ID-1 » défini par la norme internationale « ISO/IEC 7810:2003 » publiée par l'Organisation internationale de normalisation. L'élément 4 présente ainsi une forme rectangulaire.

Dans cet exemple, le circuit 8 est configuré pour réaliser une fonction logique comportant l'échange de données avec la puce électronique du module 6.

Ici, le circuit 8 comporte une interface d'échange de données, configurée pour permettre la lecture et l'enregistrement de données enregistrées dans la puce électronique du module 6 par un utilisateur de la carte 2. A cet effet, le circuit 8 comporte un écran 16 et un clavier 18. Pour simplifier la figure 1, seules trois touches du clavier 18 sont illustrées. Cet écran 16 et cette interface 18 sont électriquement connectés à la puce électronique du module 6, par l'intermédiaire du circuit 14. L'écran 16 est ainsi configuré pour afficher des données comprises dans la puce électronique du module 6.

Le dispositif 10 est apte :
- à stocker de l'énergie, et
- à alimenter électriquement le circuit 8 avec cette énergie stockée.

Ce dispositif 10 est en outre apte à être rechargé par un apport d'énergie extérieur. Par exemple, le dispositif 10 comporte une batterie électrochimique rechargeable, telle qu'une batterie au lithium. Avantageusement, le dispositif 10 comporte également un système 20 de gestion de la batterie, configuré pour contrôler et optimiser le rechargement de la batterie. Le dispositif 10 est ici relié au circuit 8 par l'intermédiaire du circuit 14.

Le capteur 12 est configuré pour recharger électriquement le dispositif 10 lorsque ce capteur 12 est éclairé par une source de lumière. A cet effet, le capteur 12 est relié électriquement au dispositif 10 au moyen d'un connecteur électrique 22. Ce connecteur 22 peut comporter un matériau électriquement conducteur. Dans cet exemple, le connecteur 22 comporte un film d'un matériau adhésif électriquement conducteur, présentant des propriétés de conduction électriques anisotropes, tel que le matériau désigné sous la référence en langue anglaise « anisotropic conductive film » et commercialisé par exemple par les sociétés « 3M », « TESA » ou « Sony ». Ce matériau permet notamment la réalisation de la connexion électrique entre le capteur 12 et le dispositif 10, par simple pression mécanique, ce qui facilite l'assemblage de la carte 2. Ici, le connecteur 22 est électriquement relié au dispositif 10 par l'intermédiaire du circuit 14. Le connecteur 22 est à cet effet ici directement relié électriquement à une zone de connexion du circuit 14.

Le capteur 12 est placé sur une face extérieure de l'élément 4, du côté comportant le module 6, comme illustré sur la figure 2. Ce capteur 12 s'étend sur au moins 20 % ou 50 % de la superficie de cette face. Avantageusement, ce capteur 12 s'étend sur plus de 70 % ou 80 % de la superficie de cette face.

Le capteur 12 est au moins partiellement transparent en lumière visible. Par « partiellement transparent », on entend ici que le capteur 12 est transparent uniquement lorsque ce capteur est observé sous un angle d'observation appartenant à un intervalle donné.

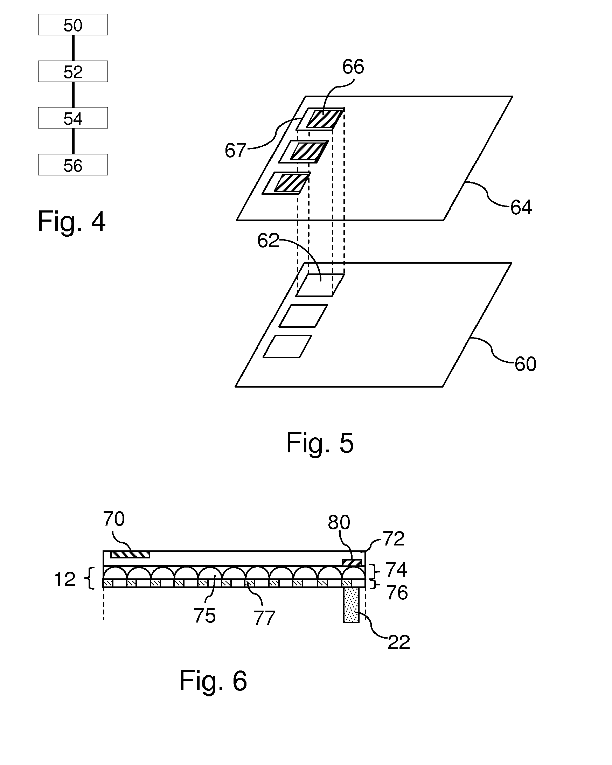

Dans cet exemple, le capteur 12 comporte un film photovoltaïque partiellement transparent proposé par la société « Wysips ». Le capteur 12 n'apparaît transparent que lorsqu'il est observé suivant des directions d'observation spécifique. Dans cet exemple, ce capteur 12 comporte une feuille 76 (figure 6) d'un matériau photovoltaïque, contrecollé à une feuille 74 de lentilles optiques lenticulaires 75 au moyen d'une colle transparente. Ce matériau photovoltaïque est disposé sous forme de bandes 77, essentiellement parallèles et superposées aux lentilles 75, de manière à ce que ces lentilles 75 limitent la visibilité de ces bandes 77 pour un observateur de la carte 2, tout en permettant à de la lumière éclairant la carte 2 d'atteindre ces bandes 77 pour générer de l'électricité. Ainsi, le capteur 12 est avantageusement transparent pour un rayonnement lumineux présentant un angle d'incidence inférieur ou égal à 20°, ou à 25°, ou à 30°, ou à 35° par rapport à une direction normale au capteur 12 et selon un côté donné de la carte 2.

Dans cet exemple, les bandes de matériau photovoltaïque comportent des électrodes qui sont reliées électriquement au connecteur 22.

La figure 3 représente plus en détail la carte 2 et ce capteur 12. Le capteur 12 s'étend ici sur la face supérieure de l'élément 4, parallèlement à l'élément 4 et au circuit 14. Ainsi, le capteur 12 est partiellement transparent en lumière visible. En l'occurrence, ici, le capteur 12 est transparent pour un rayonnement lumineux :
- en lumière visible,
- présentant un angle d'incidence, défini par rapport à une direction normale au plan dans lequel s'étend essentiellement le capteur 12.

Avantageusement, l'élément 4 comporte des couches d'illustration 40 et 41. Ces couches 40 et 41 présentent par exemple des motifs graphiques tels qu'un logo ou des caractères alphanumériques destinés à être visibles par un utilisateur de la carte 2. A cet effet, ces couches 40 et 41 sont ici placées sur des faces extérieures de l'élément 4. La couche 40 est placée sur la face avant de l'élément 4, sous le capteur 12. Ces couches 40 et 41 sont ici identiques. Aussi, seule la couche 40 sera décrite en détail par la suite. Cette couche 40 comporte ici une fine couche opaque imprimée, recouverte par un revêtement transparent de protection (dit « overlay » en langue anglaise). Ce revêtement transparent de protection est ici réalisé en matière plastique transparente, telle que le polycarbonate ou le polytéréphtalate d'éthylène (PET) ou encore le polychlorure de vinyle (PVC). Ici, le revêtement de protection de la couche 40 est contigu au capteur 12.

L'élément 4 comporte avantageusement une couche opaque de support pour, notamment, l'incorporation de composants du circuit 8 ou du circuit 14 dans l'élément 4. Ici, l'élément 4 comporte des couches opaques 42, 44, entre lesquelles sont notamment disposés le dispositif 10, le circuit 14 et l'écran 16. La couche 44, ménagée au-dessus de l'écran 16, comporte une fenêtre transparente 46 permettant la visualisation de l'écran. Les couches 42 et 44 présentent chacune une épaisseur comprise entre 100µm et 200 µm. Ces couches 42, 44 sont par exemple réalisées en matière plastique, telle que du polycarbonate ou du PET ou encore du PVC.

Un exemple de procédé d'assemblage de la carte 2 va maintenant être décrit, en référence à l'organigramme de la figure 4 et à l'aide des figures 1 à 3 et 5.

Lors d'une étape 50, un élément de corps de carte multifonctions est fourni, dépourvu notamment de capteur photovoltaïque. Par exemple, un film 60 de matière plastique est fourni, apte à être découpé en zones 62 lors d'étapes ultérieures du procédé pour former l'élément 4. Pour simplifier la figure, seules trois telles zones sont illustrées.

Lors d'une étape 52, un matériau électriquement conducteur est déposé sur une face de la carte fournie et, de préférence, uniquement sur la zone de connexion du circuit 14. Ce matériau est apte à former le connecteur 22 lors d'une étape ultérieure du procédé. Par exemple, ce matériau est le matériau adhésif électriquement conducteur précédemment décrit.

Lors d'une étape 54, le capteur 12 est fourni et placé sur une face de la carte fournie. Par exemple, un film 64 est fourni, comportant un support transparent sur lequel des zones photovoltaïques 66 sont ménagées. Chacune de ces zones 66 est apte à former le capteur 12, après découpe, lors d'une étape ultérieure du procédé. Pour simplifier la figure, seules trois telles zones sont illustrées. Ici, le film est étendu sur une partie de la face supérieure de l'élément 4. En particulier, le capteur 12 est placé de manière à être en contact avec le matériau déposé pour former le connecteur 22, de manière à établir une connexion électrique entre le dispositif 10 et le capteur 12 pour alimenter électriquement ce dispositif 10. Ici, ce film 64 comporte les lentilles 75 sur toute sa superficie et ne comporte les bandes 77 que sur les zones 66. Des zones 67 sont aptes à être découpées autour de chacune des zones 66. Chacune de ces zones 67 est apte à être superposée à une seule zone 62 lorsque les films 60 et 64 sont superposés.

Lors d'une étape 56, la carte 2 est assemblée. Par exemple, un procédé de laminage est appliqué sur l'ensemble comportant la carte et le capteur 12 fournis, de manière à les assembler mécaniquement entre eux. Lors de ce laminage, ici, le connecteur 22 est formé. Dans cet exemple, les films 60 et 64 sont assemblés par laminage, après superposition des zones 62 et 67, puis sont découpés pour former des cartes 2.

De nombreux autres modes de réalisation sont possibles.

En variante, le circuit 8 est configuré pour fonctionner indépendamment de la puce électronique du module 6.

Le circuit 8 peut comporter autre chose qu'un écran. Par exemple, le circuit 8 comporte un ou plusieurs des éléments suivants : un lecteur d'empreintes digitales, ou une antenne radiofréquence, ou un transducteur, ou une horloge à quartz, ou un module de pilotage (« driver » en langue anglaise) de l'écran 16, ou un module d'enregistrement de données, ou un microprocesseur, ou encore un système pour générer et afficher un mot de passe à usage unique. La carte 2 peut comporter plusieurs tels circuits électroniques.

En variante, le dispositif 10 est un condensateur ou un supercondensateur.

Le capteur 12 peut être placé ailleurs que sur la face avant de l'élément 4. Le capteur 12 peut être placé sur plus d'une face de l'élément 4. La carte 2 peut également comporter plusieurs capteurs photovoltaïques indépendants et identiques au capteur 12, placés sur une ou plusieurs faces de l'élément 4. Dans ce cas, ces capteurs photovoltaïques sont électriquement reliés au dispositif 10 afin de permettre le rechargement du dispositif 10.

Le capteur 12 peut comporter un substrat transparent flexible en polymère tel que du polycarbonate ou du polytéréphtalate d'éthylène.

Les bandes de matériau photovoltaïque du capteur 12 peuvent être connectées différemment au connecteur 22. Par exemple, ces bandes présentent chacune deux électrodes, reliées au connecteur 22. Cela permet que toutes ces bandes soient électriquement connectées au connecteur 22 lorsque certaines de ces bandes présentent une discontinuité, par exemple lorsqu'il est nécessaire de découper une ouverture dans le capteur 12 pour que le module 6 ne soit pas recouvert par le capteur 12.

Le capteur 12 peut être réalisé différemment. Par exemple, le capteur 12 comporte un film d'un matériau photovoltaïque transparent, tel que du silicium amorphe ou un matériau photovoltaïque organique transparent en lumière visible. Par exemple, le capteur 12 comporte la cellule photovoltaïque décrite dans l'article de R. Lunt et al. « Transparent, near-infrared organic photovoltaic solar cells s for window and energy-scavenging applications », Applied Physics Letter. vol. 98, p. 113305, 2011.

Le capteur 12 peut être en partie transparent pour un rayon lumineux présentant une direction et/ou un angle d'incidence quelconques. Le capteur 12 peut également être transparent.

Le capteur 12 peut être collé à l'élément 4 au moyen d'une colle liquide ou d'un matériau adhésif transparents, de façon à réduire le risque de désolidarisation de l'élément et du capteur 12.

Le connecteur 22 peut être réalisé à partir d'un matériau différent de celui décrit. Par exemple, le connecteur 22 comporte un élastomère électriquement conducteur, tel qu'une pâte de silicone comportant de l'argent. Le connecteur 22 peut comporter des particules métalliques (comme des particules d'argent, de cuivre ou de nickel) liées par une pâte n'étant pas électriquement conductrice. Ces particules métalliques peuvent également être des particules d'un matériau polymère recouvertes de métal.

Le connecteur 22 peut également être réalisé sans apport additionnel d'un matériau électriquement conducteur, en soudant entre eux des moyens de connexion déjà présents sur l'un ou l'autre du capteur 12 et de la zone de connexion du circuit 14, par exemple, lors de l'étape 56, au moyen d'un procédé de soudage direct par ultrasons ou par thermo-compression. Dans ce cas, l'étape 52 de dépôt d'un matériau électriquement conducteur est omise.

La couche 40 peut n'être présente que sur une seule des faces de l'élément 4. La couche 40 peut également être omise. Le revêtement transparent de protection de cette couche 40 peut être omis lorsque cette couche 40 est placée sous le capteur 12. Lorsque la couche 40 est placée sous le capteur 12, le revêtement transparent de protection de cette couche 40 peut comporter un motif imprimé pour masquer le connecteur 22.

Les emplacements et les dimensions de zones 66 peut être adapté en fonction des emplacements et des dimensions des zones 62.

La carte 2 peut comporter une bande magnétique 70 de stockage de données placée sur une face comportant le capteur 12, comme illustré sur la figure 6. Dans ce cas, cette bande 70 est déposée sur un revêtement transparent de protection 72, placé en surface du capteur 12. Ce revêtement 72 est par exemple identique au revêtement de protection de la couche 40. Ce revêtement 72 peut également comporter une zone opaque 80, située au-dessus du connecteur 22, pour masquer visuellement ce connecteur, de façon à ce qu'il ne puisse pas être vu par un utilisateur de la carte. Cette zone 80 est ici imprimée sur la face du revêtement 72 en contact avec le capteur 12.

## Revendications

1. Carte à puce (2) multifonctions, comportant :
- un élément de corps de carte (4), comportant un module à contact (6) incluant une puce électronique ;
- un dispositif (10) de stockage d'énergie rechargeable, connecté électriquement au circuit électronique pour alimenter électriquement ce circuit électronique ;
- un capteur photovoltaïque (12), s'étendant au moins partiellement sur une face de l'élément de corps de carte et étant électriquement connecté au dispositif de stockage d'énergie pour recharger ce dispositif de stockage d'énergie ;
**caractérisé en ce que** le capteur photovoltaïque est au moins partiellement transparent pour la lumière visible.

2. Carte selon la revendication 2, dans laquelle le capteur photovoltaïque transparent (12) s'étend sur au moins 70 % de la surface de l'élément de corps de carte (4).

3. Carte selon la revendication 2, dans laquelle :
- un revêtement transparent de protection (72) est déposé sur le capteur photovoltaïque transparent (12) ;
- une bande magnétique (70) est placée sur ce revêtement transparent de protection.

4. Utilisation d'un capteur photovoltaïque (12) transparent pour alimenter électriquement une carte à puce (2) multifonctions, cette carte à puce multifonctions comportant :
- un élément de corps de carte (4), comportant un module à contact (6) incluant une puce électronique ;
- un circuit électronique (8), placé dans l'élément de corps de carte ;
- un dispositif (10) de stockage d'énergie rechargeable, connecté électriquement au circuit électronique pour alimenter électriquement ce circuit électronique ;
le capteur photovoltaïque (12) transparent s'étendant au moins partiellement sur une face de l'élément de corps de carte et étant électriquement connecté au dispositif de stockage d'énergie pour recharger ce dispositif de stockage d'énergie.

5. Procédé d'assemblage d'une carte à puce multifonctions comportant un capteur photovoltaïque transparent, **caractérisé en ce que** ce procédé comporte :
- la fourniture (50) d'une carte à puce multifonctions, comportant :
• un élément de corps de carte,
• un circuit électronique, placé dans l'élément de corps de carte ;
• un dispositif de stockage d'énergie rechargeable, connecté électriquement au circuit électronique pour alimenter électriquement ce circuit électronique ;
- la fourniture (54) du capteur photovoltaïque transparent, ce capteur étant placé de manière à s'étendre sur une face dudit élément de corps de carte ;
- le pressage (56) de l'ensemble comportant l'élément de corps de carte et le capteur photovoltaïque transparent pour assembler mécaniquement cet ensemble.

6. Procédé selon la revendication 5, dans lequel le procédé comporte en outre le dépôt (52) d'un matériau électriquement conducteur sur une face de l'élément de corps de carte, ce matériau électriquement conducteur étant apte à former un connecteur électrique entre le circuit électronique et le capteur photovoltaïque transparent lors du pressage (56).

7. Procédé selon la revendication 6, dans lequel le matériau électriquement conducteur comporte un film adhésif électriquement conducteur présentant des propriétés de conduction électriques anisotropes.

8. Procédé selon la revendication 6, dans lequel le matériau électriquement conducteur comporte un élastomère électriquement conducteur sensible à la pression.

9. Procédé selon la revendication 6, dans lequel le matériau électriquement conducteur comporte des particules métalliques ou de polymère métallisé liées par une pâte non électriquement conductrice.
